Europäisches Patentamt

European Patent Office

Office européen des brevets

(11) Publication number: **0 153 015**
**A2**

# EUROPEAN PATENT APPLICATION

(12)

(21) Application number: **85300383.8**

(22) Date of filing: **30.01.85**

(51) Int. Cl.⁴: **G 06 F 12/06**

(30) Priority: **07.02.84 GB 8403229**

(71) Applicant: **STANDARD TELEPHONES AND CABLES PUBLIC LIMITED COMPANY, 190 Strand, London, WC2R 1DU (GB)**

(43) Date of publication of application: **28.08.85 Bulletin 85/35**

(72) Inventor: **Monk, Trevor Kenneth, 134, The Drive, Bexley Kent (GB)**

(74) Representative: **Dennis, Mark Charles, STC Patent Department Edinburgh Way, Harlow Essex CM20 2SH (GB)**

(84) Designated Contracting States: **AT BE CH DE FR IT LI LU NL SE**

(54) **Wafer scale integrated circuits.**

(57) A wafer scale integrated circuit comprises an array of similar circuit blocks (11), e.g. random access memory blocks, and a block recognition address bus (14) for storing an address code in each functional block. The blocks are coupled in a serial manner to the bus. An initial address is applied to the bus from a generator (13) and this address is stored in the first functional block. The address bus then augments this code to provide an address for the next functional block and so on.

0153015

T.K. Monk-7

US  Japan  Europe

## WAFER SCALE INTEGRATED CIRCUITS

This invention relates to wafer scale integrated circuits, i.e. devices comprising a plurality of interconnected circuits disposed on a common semiconductor wafer.

Semiconductor memories are finding increasing application in computer storage. To provide a large storage capacity, e.g. in a mainframe computer, it is necessary to employ a large number of such devices. This of course, requires the provision of a suitable circuit board together with the interconnections necessary to provide access to each memory device. Such a circuit board is of course, relatively costly and the arrangement occupies a significant volume. Attempts have been made to overcome this problem by providing a plurality of memory blocks on a common wafer. Such an arrangement has the advantage that common address circuitry can be employed. This provides a high degree of compaction and results in a significant cost reduction.

The introduction of wafer scale integrated circuits of this type has so far been prevented by the difficulty of achieving a commercially viable yield. As the chip area of an integrated circuit increases the probability of a processing fault increases rapidly. For a wafer scale circuit the probability of no faults is virtually zero.

The object of the present invention is to minimise or to overcome this disadvantage.

According to one aspect of the invention there is provided a wafer scale integrated circuit, including a plurality of similar circuit blocks, at least some of which are functional, and means for providing each said functional block with an address from a sequence of addresses and for storing that address in the functional block.

According to another aspect of the invention there is provided a wafer scale integrated circuit, including an array of blocks of memory cells, a block recognition address bus to which the memory blocks are coupled in a serial manner, an address generator adapted to apply an initial address code via the bus to the first memory block of the series, and a data bus whereby in use data are stored in and retrieved from the memory blocks, wherein the address bus has means one associated with each memory block for storing a block address in each functional memory block and for generating from that address a new address for the next functional memory block in the series.

An embodiment of the invention will now be described with reference to the accompanying drawings in which:-

Fig. 1 is a schematic diagram of the wafer scale integrated circuit.

Fig. 2 illustrates the overall circuit block recognition process;

and Fig. 3 illustrates the recognition process for a single circuit block.

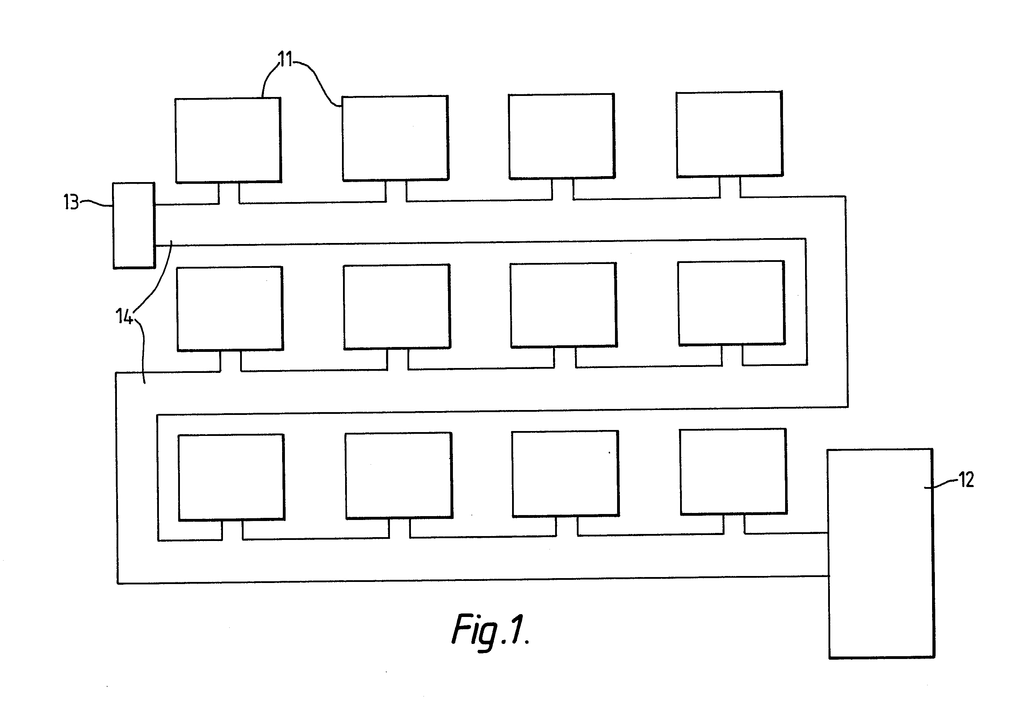

Referring to Fig. 1, the circuit includes an array of memory (RAM) blocks 11, an interface block 12 for transmitting data to and from the circuit, and an address generator 13 which provides a single address code. The circuit also includes a block recognition address bus 14, whereby the memory blocks are coupled in a serial manner to the address generator, and the data bus for input and output of stored information. The purpose of the address generator 13 is to provide a signal to the bus 14 corresponding to the address of the first memory block in the series arrangement. The address bus, starting from this address, then provides addresses for each functional memory block in the series.

In operation, combinations of clock signals strobe address information from the address bus into every working RAM module. This causes each block of RAM to access one address location. Next, a block address is put onto the address bus and clocked into every working RAM module. The block of RAM, whose block recognition address matches the incoming block address, is connected to the data bus. The accessed address location within this selected block may now be read or written via the data bus.

If, during operation, the block address exceeds the number of good RAM blocks on the wafer (as stored in PROM in the interface circuitry), an "invalid block address" signal is output from the wafer.

Typically, the RAM modules are Dynamic RAMs (DRAMs). These use Row Address Strobe (RAS) and Column Address Strobe (CAS) clocks to strobe in row and column addresses from the address bus. A Block Address Strobe (BAS) clock is used to strobe in the block address from the address bus. Refresh cycles are performed on the DRAM either way using RAS only or using other prior art techniques.

If the address bus is n bits wide and addresses are clocked in m times, this gives a total addressable space of $(2^n)^m$ locations. Typically the address bus is 8 bits wide and is strobed in 3 times (i.e. on RAS, CAS & BAS). Hence, there are a total of $(2^8)^3$ = 16M address locations.

The data word length stored at each address location is determined by system requirements and wafer complexity, and is not dependent on the addressing scheme used.

## Automatic Generation of Block Recognition Addresses

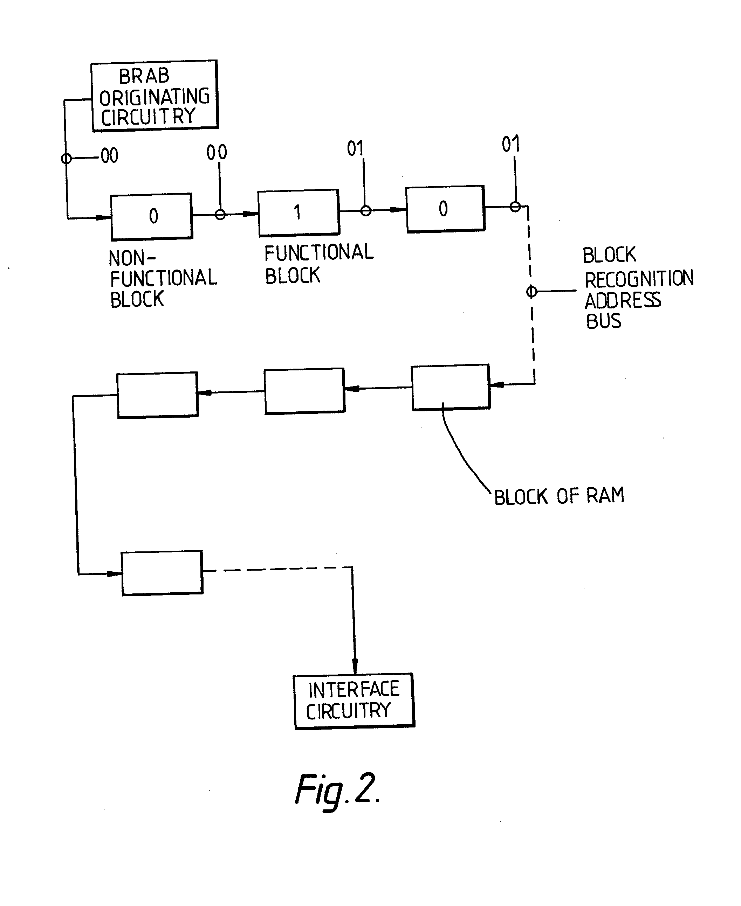

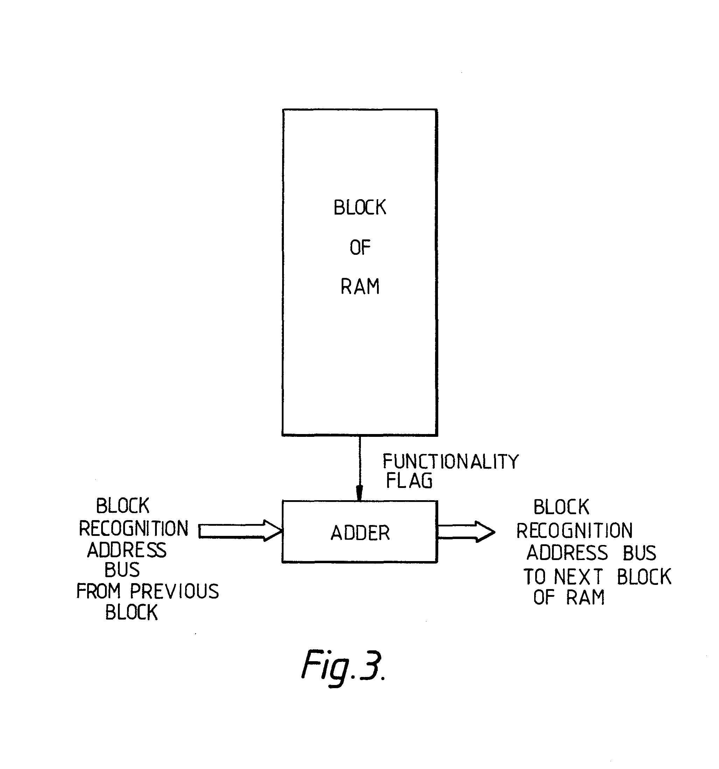

This section describes with reference to Figs. 2 and 3 a process whereby a unique block recognition address is automatically generated for each block of functional RAM.

The wafer requirements are as previously described with the addition of a Block Recognition Address Bus (BRAB), which is connected in a "daisy chain" manner sequentially through every block of RAM (Fig. 2). The BRAB originates in a piece of circuitry which generates the address "00....00" and places this address on the start of the bus. The BRAB terminates in the interface circuitry.

During testing by the manufacturer, each block of RAM is checked individually. A functional block has its functionality flag set (again performed using PROM). Non functional blocks have their functionality flags reset and are disabled so they consume no unnecessary power.

Associated with each block of RAM is a section of BRAB control circuitry. This consists essentially of an adder (Fig. 3) whose inputs are the incoming BRAB and the block functionality flag, and whose output is the outgoing BRAB.

In use a functional block of RAM takes as its block recognition address, the address on the incoming BRAB. If the block address (as strobed in by BAS) matches the incoming BRAB then that block is connected to the Data Bus and hence accessed.

It will be appreciated that because the address on the BRAB is increased by one if and only if the BRAB is going through a functional block of RAM, each working block of RAM is assigned a unique and sequential block recognition address.

Fig. 2 shows the BRAB passing through a number of blocks of RAM. The value of the functionality flag is shown within each block of RAM such that functional blocks are depicted by a "1" and non-functional blocks are depicted by a "0". The address on the BRAB is also shown as it is affected by each block.

The BRAB starts with address "00" and goes to the first block. This is non-functional so its functionality flag is set at zero. Zero is therefore added to the address on the BRAB which emerges from the block unchanged at "00". The second block is functional so it takes as its block recognition address the value of the incoming BRAB. Hence this first working block of RAM will recognise a block address of "00". As it is functional, its functionality flag has value "1". This is added to the address on the incoming BRAB to generate the address on the outgoing BRAB of "01". The next working block of RAM along the chain will therefore recognise "01" as its block address and output "02" onto the BRAB. Non-functional blocks of RAM (like the third block shown in Fig. 2) will leave the address on the BRAB unaffected. Thus each working block of RAM has its own unique block address.

It will be noted that the value on the BRAB corresponds to the number of working blocks the BRAB has passed through. Thus the total number of working blocks of RAM on the wafer may be deduced from the address at the end of the BRAB. By terminating the BRAB in the interface circuitry, this signal may be used for generating the "invalid block address" flag for system use.

There may exist a requirement for blocks of RAM having n bit long words to be connected to an m bit wide data bus. Under these circumstances the block recognition address may be used to select which bits of the block I/O signal are to be connected to which bits of the wafer data bus.

For example, n may have the value 4 and m may be 8. Under these circumstances, the least significant bit of the block recognition address determines which block is connected to which half of the data bus. Hence, for example, even numbered blocks may be connected to the lower 4 bits on the data bus and odd numbered blocks may be connected to the higher 4 bits on the data bus. The remaining bits of the block recognition address are used in the normal way to select which blocks are to be accessed. Hence, in this example, pairs of RAM blocks are accessed at a time to enable 8 bits of data to have storage space at a given address location.

It will be appreciated that the method of generation of the block recognition address is independent of the operation of circuitry described in this sub-section.

Whilst the technique has been described in relation to memory circuits it will be understood that it is also applicable to other circuits having a plurality of similar circuit blocks.

CLAIMS:-

1.      A wafer scale integrated circuit, including a plurality of similar circuit blocks, at least some of which are functional, and means for providing each said functional block with an address from a sequence of addresses and for storing that address in the functional block.

2.      A wafer scale integrated circuit, including an array of blocks of memory cells, a block recognition address bus to which the memory blocks are coupled in a serial manner, an address generator adapted to apply an initial address code via the bus to the first memory block of the series, and a data bus whereby in use data are stored in and retrieved from the memory blocks, wherein the address bus has means one associated with each memory block for storing a block address in each functional memory block and for generating from that address a new address for the next functional memory block in the series.

3.      A wafer scale integrated circuit as claimed in claim 1, wherein said block recognition address bus includes adders one associated with each memory block whereby a new address is formed by augmentation of an address corresponding to a functional memory block.

4.      A wafer scale integrated circuit as claimed in claim 1 or 2, wherein each said memory block has programmable means whereby its functionality or non-functionality may be indicated to the address bus.

5.      An integrated circuit as claimed in any one of claims 1 to 4, wherein non-functional blocks are disabled from the circuit power supply.

6.      A wafer scale integrated circuit substantially as described herein with reference to the accompanying drawings.

7.      A computer incorporating one or more wafer scale integrated circuits as claimed in any one of claims 1 to 6.

Fig.1.

Fig.2.

Fig.3.